# EUROPEAN PATENT APPLICATION

(11) **EP 4 838 937 A1**
(43) Date of publication of application: **11.11.2026**
(21) Application number: 24914613.5
(22) Date of filing: 04.01.2024
(51) Int. Cl.: H04W 24/06

(54) **DATA COLLECTION METHOD AND APPARATUS**

(71) Applicant: 1FINITY INC., Kawasaki-shi, Kanagawa 211-8588 (JP)
(72) Inventor: GENG, Tingting, Beijing 100022 (CN)
(74) Representative: Haseltine Lake Kempner LLP
(86) International application number: PCT/CN2024/070595
(87) International publication number: WO 2025/145383

(57) **Abstract**

Embodiments of the present disclosure provide a data collection method and a data collection apparatus, the method comprising that: a first network device receives first configuration information, the first configuration information being used to indicate that the first network device performs collection of data related to artificial intelligence and/or machine learning; and the first network device performs collection of data related to artificial intelligence and/or machine learning according to the first configuration information. According to embodiments of the present disclosure, a core network device, or an OAM, or other network devices may obtain air interface data related to AI/ML at a terminal equipment side via an access network device, thereby providing data support for model training and implementing corresponding model training functions.

## Description

### TECHNICAL FIELD

Embodiments of the present disclosure relate to the technical field of communications.

### BACKGROUND

In 3GPP R18 artificial intelligence/machine learning (AI/ML) topics, a plurality of types of scenarios or sub-scenarios, such as CSI enhancement (which may further include at least one sub-scenario in CSI compression and CSI prediction), beam management, positioning or other scenarios, are defined. In 3GPP R19 AI/ML-based mobility topics, new scenario types are taken into account, such as ordinary handover, conditional handover, and lower-layer (L1/L2) triggered mobility (LTM). Different scenarios or sub-scenarios may correspond to one or more features/feature groups. The above feature(s)/feature group(s) applied with AI/ML is/are referred to as AI/ML-based or AI/ML-enabled feature(s)/feature group(s). One AI/ML-based or AI/ML-enabled feature/feature group may correspond to one or more AI functionalities, and/or one or more AI models. One AI functionality may further correspond to one or more AI models.

It should be noted that the above introduction to the technical background is just to facilitate a clear and complete description of technical solutions of the present disclosure, and is elaborated to facilitate understanding of those skilled in the art. It cannot be considered that the technical solutions are known by those skilled in the art just because these solutions are elaborated in Background of the present disclosure.

### SUMMARY

Inventor finds that in order to obtain a corresponding AI model, model training needs to be performed based on data, accordingly, a network element performing model training needs to acquire corresponding data. In related arts, operation administration and maintenance (OAM)/a core network (CN) may adopt a Minimization of Drive-Test (MDT) mechanism, and collect via a base station air interface data of a use equipment (UE, a terminal equipment), such as cell measurement result information. However, existing MDT mechanisms is unable to support data collection under a Radio Access Network 1 (RAN1, Radio Access Network First Working Group) AI scenario(s).

For at least one of the above problems or other similar problems, embodiments of the present disclosure provide a data collection method and a data collection apparatus, so that a core network device, or an OAM, or other network devices may obtain air interface data related to artificial intelligence (AI)/machine learning (ML) at a terminal equipment side via a base station, thereby providing data support for model training and implementing corresponding model training functions.

According to an aspect of embodiments of the present disclosure, a data collection apparatus is provided, configured in a first network device, wherein the apparatus includes:
a receiving unit configured to receive first configuration information, the first configuration information being used to indicate that the first network device performs collection of data related to artificial intelligence and/or machine learning; and
a processing unit configured to perform collection of data related to artificial intelligence and/or machine learning according to the first configuration information.

One of advantageous effects of embodiments of the present disclosure lies in that according to embodiments of the present disclosure, a core network device, or an OAM, or other network devices may obtain air interface data related to artificial intelligence (AI)/machine learning (ML) at a terminal equipment side via a base station, thereby providing data support for model training and implementing corresponding model training functions.

Referring to later descriptions and drawings, specific implementations of the present disclosure are disclosed in detail, indicating modes in which principles of the present disclosure may be adopted. It should be understood that implementations of the present disclosure are not limited in scope thereby. Within spirits and scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of a data collection method in embodiments of a first aspect of the present disclosure;
FIG. 2 is a schematic diagram of information interaction according to a data collection method in embodiments of the present disclosure;
FIG. 3 is another schematic diagram of information interaction according to a data collection method in embodiments of the present disclosure;
FIG. 4 is a schematic diagram of a data collection apparatus in embodiments of the present disclosure.
FIG. 5 is a schematic diagram of a communication system in embodiments of the present disclosure;
FIG. 6 is a schematic diagram of a network device in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations in which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, scenarios containing a network device (which may be also called a network element) and/or a terminal equipment are taken as examples.

In the above scenarios, the network device may include at least one of a core network device, a third-party application device, an operation administration and maintenance (OAM) device, or an access network device.

The core network device may refer to a device in a core network (CN) that provides service support for a terminal equipment. As some instances, a core network device may be at least one of the following: a mobility and management entity (MME), an access and mobility management function (AMF) entity, a session management function (SMF) entity, a user plane function (UPF) entity, or a Location Management Function (LMF) entity, etc., which are not exhaustively listed here. The AMF entity may be responsible for access management and mobility management of terminals, the SMF entity may be responsible for session management, such as session establishment of a user, and the UPF entity may be a functional entity of a user plane and is primarily responsible for connecting to external networks. The LMF entity may manage overall coordination and scheduling of resources required for positioning a terminal equipment that is registered with, or accesses, a core network device. It should be noted that in embodiments of the present disclosure, the entity may also be called a network element or a functional entity. For example, the AMF entity may also be called an AMF network element or an AMF functional entity, and so on.

The third-party application device may be an OTT server (over the top server) or other third-party device.

The OAM device may be a network device that performs management work such as operation, administration, and maintenance, etc. on a network according to actual needs of an operator's network operations.

The access network device is an access device through which a terminal equipment wirelessly accesses a communication system. The access network device may be a base station (BS), an evolved NodeB (eNodeB), a transmission reception point (TRP), a base station (next generation NodeB, gNB) in a 5th generation (5G) mobile communication system, a base station in a 6th generation (6G) mobile communication system, a base station in a future mobile communication system or an access node in a WiFi system, etc. The access network device may further be a module or unit that completes part of functions of a base station, for example, may be at least one of the following modules or units: a central unit (CU), a distributed unit (DU), a central unit control plane (CU-CP), a central unit user plane (CU-UP), an Integrated Access Backhaul (IAB), or other module or unit. Embodiments of the present disclosure do not define specific technologies and/or specific device forms adopted by the access network device. The access network device may be deployed on land, including indoors/outdoors, and may be handheld or vehicle-mounted, or may further be deployed on water surfaces, on planes, balloons, or satellites. The access network device may be deployed in a fixed position or on a mobile carrier. Embodiments of the present disclosure do not define in this regard.

In the above scenarios, the terminal equipment (user equipment, UE) may be a device having a wireless transceiving function, may transmit signals to the access network device and/or receive signals from the access network device. The terminal equipment may also be called a terminal, a mobile station, or a mobile terminal, etc. The terminal equipment may be a mobile phone, a tablet, or other device having a wireless smart transceiving function. The terminal equipment may be widely applied in various scenarios, such as device-to-device (D2D), vehicle-to-everything (V2X) communication, machine-type communication (MTC), Internet of Things (IoT), virtual reality, augmented reality, industrial control, autonomous driving, telemedicine, or various smart scenarios.

In the above scenarios, communication between an access network device and a terminal equipment and communication between terminal equipments may be performed via licensed spectrum, or via license-free spectrum, or via both licensed spectrum and license-free spectrum simultaneously. Embodiments of the present disclosure do not define spectrum resources used for wireless communications.

In embodiments of the present disclosure, in order to obtain a corresponding model, model training needs to be performed based on data, accordingly, a network element performing model training needs to acquire corresponding data. For the above scenarios, the network element performing model training needs to collect corresponding L1 and/or L3 data. The L1 and/or L3 data may be at least one of L1 and/or L3 measurement result information, and a ground truth value. The measurement result information includes at least one of the following: a Reference Signal Receiving Power (RSRP), a Reference Signal Receiving Quality (RSRQ), a Reference Signal Strength Indicator (RSSI), a Signal to Interference plus Noise Ratio (SINR), a Channel Quality Indicator (CQI), a Precoding Matrix Indicator (PMI), a CSI-RS Resource Indicator (CRI), an SS/PBCH Block Resource Indicator (SSBRI), a layer indicator (LI), a Rank Indicator (RI), a precoding matrix, a raw channel matrix, right singular vectors of the channel matrix, scalar quantization information, codebook-based quantization information, or other signal quality information. The ground truth value refers to a measurement value that may serve as a benchmark. Generally speaking, the ground truth value is a relative concept, and is a measurement value obtained through a relatively reliable measurement method.

Taking a CSI enhancement scenario as an example, the network element performing model training needs to collect at least one of the following data: a Channel Quality Indicator (CQI), a Precoding Matrix Indicator (PMI), a CSI-RS Resource Indicator (CRI), an SS/PBCH Block Resource Indicator (SSBRI), a layer indicator (LI), a channel matrix, right singular vectors of the channel matrix, a Rank Indicator (RI), L1-RSRP, a ground truth value, L1-SINR, or other L1 measurement result information.

Taking beam management as an example, the network element performing model training needs to collect at least one of the following data: a precoding matrix, a raw channel matrix, scalar quantization information, codebook-based quantization information, a ground truth value, beam measurement result information, or other measurement result information.

Currently, RAN2#123bis has agreed to a mechanism that an OAM performs data collection related to AI model training, i.e., OAM-centric data collection. In addition, the Standard is still discussing CN-centric data collection. A specific data collection mechanism remains to be further designed. As one possible implementation, Minimization of Drive-Test (MDT) technology may be used as a baseline, and potential enhancement mechanisms are taken into account to support OAM-centric data collection.

Moreover, in related arts, an OAM / CN may adopt an MDT mechanism to collect air interface data, such as cell measurement result information, of a UE via a base station. Taking "an OAM adopts an MDT mechanism" as an example, a possible process is as follows:
1. A core network device AMF transmits MDT intention information of a UE to a base station;
2. The base station stores the MDT intention information of the UE;
3. An OAM transmits MDT activation information to the base station, the MDT activation information being used to indicate that the base station activates corresponding MDT functions;
4. The base station selects an appropriate UE to perform MDT functions based on the MDT activation information transmitted by the OAM and the stored MDT intention information of the UE;
5. The base station transmits MDT configuration information to the UE, the MDT configuration information being used to configure the UE to perform MDT functions; and
6. The base station receives an MDT report transmitted by the UE, the MDT report may include at least one of the following information: cell measurement result information, power headroom measurement information, data transmission latency measurement information, data packet capacity measurement information, UE throughput measurement information, packet loss rate measurement information, or other measurement information.

It may be seen that existing MDT mechanisms are unable to support data collection in AI scenarios.

Embodiments of the present disclosure are described below with reference to the drawings and specific implementations. For ease of description, the following text will take a base station as an example of an access network device for description. In the following descriptions, without causing confusion, "if...", "in a case where..." and "when..." may be used interchangeably.

### Embodiments of a First Aspect

Embodiments of the present disclosure provide a data collection method, which will be described from a side of a first network device. The first network device may be an access network device.

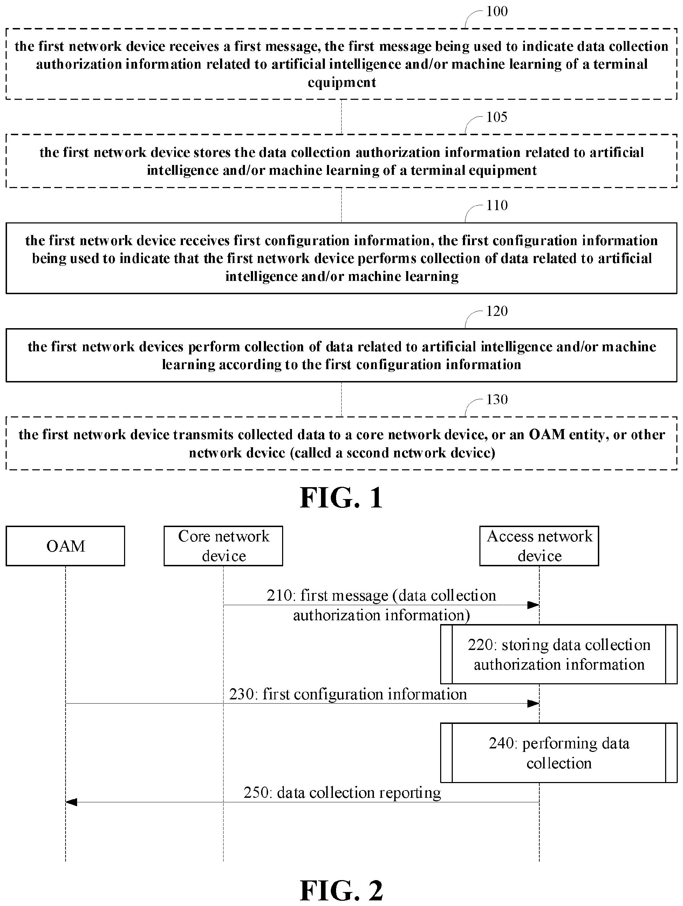

FIG. 1 is a schematic diagram of the data collection method in embodiments of the present disclosure, as shown in FIG. 1, the method includes:
110: the first network device receives first configuration information, the first configuration information being used to indicate that the first network device performs collection of data related to artificial intelligence and/or machine learning; and
120: the first network devices perform collection of data related to artificial intelligence and/or machine learning according to the first configuration information.

It is worth noting that the above FIG. 1 only schematically describes embodiments of the present disclosure, however the present disclosure is not limited thereto. For example, some other operations may be added or certain operations therein may be reduced. Those skilled in the art may make appropriate modifications according to the above contents, not being limited to records in the above FIG. 1.

According to the above embodiments, a core network device, or an OAM, or other network devices may obtain air interface data related to AI/ML at a terminal equipment side via a base station (the first network device), thereby providing data support for model training and implementing corresponding model training functions.

In embodiments of the present disclosure, the first network device may receive the first configuration information from a core network device or may receive the first configuration information from an OAM. The present application is not limited thereto, and the first network device may further receive the first configuration information from other network devices.

In some embodiments, the first configuration information includes at least one of the following: data collection configuration information, identifier information of a terminal equipment, or data source indication information.

In the above embodiments, the data collection configuration information is used to indicate configuration information for the first network device performing the data collection or the first network device configuring a terminal equipment to perform the data collection. For example, the data collection configuration information may include at least one of the following: data collection mode information, data collection area information, data collection type information, data collection operation information, data collection volume information, or data collection quality information.

The data collection mode information is configured to indicate a data collection mode corresponding to a data collection configuration. For example, the data collection mode may include at least one of the following: immediate collection, connection state log collection (e.g., logging MDT), non-connection state log collection (e.g., logged MDT), trace collection or other data collection modes. The connection state log collection mode may refer to a mechanism in which a terminal equipment is in a connected state and attempts to collect measurement result information for multiple times according to a configuration of a network device, and reports collected measurement result information.

The data collection area information may be used to indicate an area in which data collection may be performed. For example, the data collection area information may include at least one of the following: information of at least one beam of at least one cell, information of at least one cell, information of at least one tracking area code, information of at least one public land mobile network (PLMN), or information of at least one tracking area identifier.

The beam information may be beam type information, beam index information, beam identifier information, or other beam information. The beam type information may be at least one of an SSB and a CSI-RS.

Optionally, the information of at least one beam of at least one cell may include beam information, or beam information and cell information. As an example, if information of at least one beam of at least one cell includes beam information, it may be considered that the data collection area information is beam information in a current serving cell of a UE.

Cell information includes at least one of the following: a cell global identifier (CGI), a physical cell identifier (PCI) and frequency information, a cell identifier (cell ID), a non-public network identifier (NPN ID), a non-terrestrial network identifier (NTN ID), or other cell identifier. The CGI may include a public land mobile network identifier (PLMN ID) and a cell ID. Optionally, cell information may further include a tracking area code (TAC) and/or identifier information of a network device to which a cell belongs, such as a global network device identifier.

It is understandable that the data collection area information may be defined at a data collection type level, a data collection mode level, or as common information.

The data collection type information may be used to indicate data information and/or measurement result information that needs to be collected. As an example, data collection types may correspond to AI/ML scenarios or sub-scenarios, for example a data collection type may be CSI prediction, CSI compression, beam management, positioning, ordinary handover, conditional handover, lower-layer triggered mobility, or other type.

The data collection operation information may be used to indicate a logging mode of data collection. As an example, the data collection operation information may include at least one of logging interval information, or logging duration information.

The data collection volume information may be used to indicate a size of data that needs to be collected. As an example, the data collection volume information may indicate a size of collected data, or the number of entries of collected data.

The data collection quality information may be used to indicate a quality requirement for the data that needs to be collected. As an example, the data collection quality information may indicate threshold information of a difference value between measurement data and a ground truth value. Or, the data collection quality information may indicate distribution information of data that needs to be collected.

In the above embodiments, the identifier information of a terminal equipment may be used to indicate a terminal equipment that needs to perform data collection. For example, the identifier information of a terminal equipment may include at least one of the following: identifier information of a terminal equipment at the core network device side over an interface between an access network and a core network device (e.g., AMF UE NGAP ID), identifier information of a terminal equipment at the access network device side over an interfaces between an access network and a core network device (e.g., RAN UE NGAP ID), a global unique temporary UE identity (GUTI), an international mobile subscribe identity (IMSI), a temporary mobile subscribe identity (TMSI), or other identifier information.

In the above embodiments, the data source indication information may be used to indicate whether the data, which meets requirements and has been stored or collected by the first network device, can be received. For example, when the access network device has stored data required by an OAM, the OAM may indicate whether the access network device may transmit the data to the OAM; further, the access network device may not trigger data collection of a terminal equipment.

In embodiments of the present disclosure, the first configuration information is e.g., information element (IE) MDT configuration-NR, the information element defining MDT configuration parameters for NR, such as the aforementioned data collection configuration information, the identifier information of a terminal equipment, the data source indication information, etc., details thereof are described above and are not further elaborated here.

In embodiments of the present disclosure, the first configuration information may be transmitted via a terminal equipment context setup request message, or via a handover request message, or via a trace start message, or via other messages for data collection, and the present disclosure does not impose limitations in this regard.

In some embodiments, as shown in FIG. 1, the method further includes:
100: the first network device receives a first message, the first message being used to indicate data collection authorization information related to artificial intelligence and/or machine learning of a terminal equipment; and
105: the first network device stores the data collection authorization information related to artificial intelligence and/or machine learning of a terminal equipment.

In the above embodiments, the first network device may receive the first message from a core network device or may receive the first message from an OAM. The present application is not limited thereto, and the first network device may further receive the first message from other access network devices or OTT servers. The present disclosure does not impose any limitation on a transmitting mode and a receiving mode of the first message.

In the above embodiments, the first message may be a terminal equipment context setup request message or may be a handover request message, the present application is not limited thereto.

In the above embodiments, the first message, and a message for transmitting the first configuration information may be the same message or may be different messages. For example, the first network device receives the first configuration information and the first message transmitted by a core network device. The first configuration information may be carried in the first message, or the first configuration information may be carried in other message different from the first message.

In the above embodiments, the data collection authorization information may be used to indicate information related to data collection that a terminal equipment is willing to support, and for example may include at least one of the following: data collection type information, data collection mode information, or data collection area information.

The data collection type information is used to indicate data information and/or measurement result information that a terminal equipment is willing to support to be collected. For description of the data collection type information, reference may be made to the above description, and details thereof are not repeated here.

The data collection mode information is used to indicate a data collection mode corresponding to a data collection configuration that a terminal equipment is willing to support. Details thereof have been described above, and are not repeated here.

The data collection area information is used to indicate an area in which a terminal equipment is willing to support data collection. Details thereof have been described above, and are not repeated here.

As an example, for the correspondence between a data collection type and a data collection area in the data collection authorization information, Table 1 below may be referred to:

**Table 1**

| Data collection authorization information | |
|---|---|
| > List of data collection type information | |
| >> Data collection type 1 | |
| >> Data collection area 1 | Data collection area 1 corresponds to data collection type 1 |
| >> Data collection type 2 | |
| >> Data collection area 2 | Data collection area 2 corresponds to data collection type 2 |

As another example, for the correspondence between a data collection type and a data collection area in the data collection authorization information, Table 2 below may be referred to:

**Table 2**

| Data collection authorization information | |
|---|---|
| > List of data collection type information | |
| >> Data collection type 1 | |
| >> Data collection type 2 | |
| > Data collection area | Data collection area is applicable to data collection types 1 and 2 |

In some embodiments, optionally, the first network device may further receive data collection capability information related to artificial intelligence and/or machine learning of a terminal equipment, and store the data collection capability information related to artificial intelligence and/or machine learning of the terminal equipment.

In the above embodiments, the first network device may receive the data collection capability information from a terminal equipment, the present application is not limited thereto, the first network device may further receive the data collection capability information from a core network device or other access network devices.

In embodiments of the present disclosure, in operation 120, the first network device may perform collection of data related to AI and/or ML according to the received first configuration information.

For example, the first network device directly performs the collection of the data. For another example, the first network device selects or configures a terminal equipment to perform the collection of the data.

In a possible example, the first network device selects or configures a terminal equipment to perform the collection of the data according to the first configuration information and the first message.

In another possible example, the first network device further receives the data collection capability information, thereby the first network device selects or configures a terminal equipment to perform the collection of the data according to the first configuration information, the first message, and the data collection capability information.

In some embodiments, as shown in FIG. 1, the method further includes:
130: the first network device transmits collected data to a core network device, or an OAM entity, or other network device (called a second network device).

In the above embodiments, optionally, the first network device may further receive identifier information and/or address information of the other network device, correspondingly, the first network device transmits collected data to the other network device according to the identifier information and/or address information. The identifier information may be an identifier of other network device, and/or interface type information for accessing the other network device. For example, the interface type information may be information on a type of a control plane interface between a core network device and an access network device (NG-C), a control plane interface between access network devices (Xn-C), an air interface (Uu), a control plane interface between a CU and a DU (F1-C), an interface between a CU-CP and a CU-UP (E1), or other interface. Furthermore, the address information may be a transport layer address. For example, the first network device receives identifier information and/or address information of the other network device transmitted by a core network device or an OAM entity.

In embodiments of the present disclosure, the collected data may include at least one of L1 measurement result information, L3 measurement result information, or a ground truth value. Relevant contents regarding the measurement result information and the ground truth value have been described above, and are not further repeated here.

The data collection method in embodiments of the present disclosure is described below through two specific examples.

FIG. 2 is a schematic diagram of information interaction according to a data collection method in embodiments of the present disclosure. As shown in FIG. 2, a process of the information interaction includes:
210: an access network device receives a first message transmitted by a core network device, the first message being used to indicate data collection authorization information related to AI/ML of a terminal equipment;
220: the access network device stores the data collection authorization information related to AI/ML of a terminal equipment;
230: the access network device receives a second message transmitted by an OAM, the second message being used to indicate that the access network device performs data collection;
240: the access network device performs data collection; and
250: the access network device transmits collected data to the OAM, or other network device.

It is worth noting that the above FIG. 2 only schematically describes embodiments of the present disclosure, however the present disclosure is not limited thereto. For example, some other operations may be added or certain operations therein may be reduced. Those skilled in the art may make appropriate modifications according to the above contents, not being limited to records in the above FIG. 2.

In operation 210, that an access network device (i.e., the aforementioned first network device) receives a first message transmitted by a core network device is taken as an example, the present disclosure is not limited thereto, the access network device may further receive the first message from other network device, such as an OAM, other access network device, an OTT server, etc.

In the above example, the first message may be a terminal equipment context setup request message or a handover request message, etc.

In the above example, the first message may include data collection authorization information. Relevant contents regarding the data collection authorization information have been described above, and are not further repeated here.

In operation 220, optionally, the access network device may further store data collection capability information related to AI/ML of a terminal equipment. For example, the access network device receives data collection capability information related to AI/ML of a terminal equipment, transmitted by the terminal equipment, a core network device, or other access network device, and stores the received data collection capability information related to AI/ML of a terminal equipment. The present disclosure does not impose limitations on specific implementations thereof.

In operation 230, the second message includes the aforementioned first configuration information, the first configuration information including data collection configuration information. Relevant contents regarding the data collection configuration information have been described above, and are not further repeated here. Optionally, the first configuration information may further include data source indication information. Relevant contents regarding the data source indication information have been described above, and are not further repeated here.

In the above example, that the access network device receives the second message transmitted by the OAM is taken as an example, the present disclosure is not limited thereto, the access network device may further receive the second message from the core network device or other network device.

If the access network device receives the first message and the second message from the same network devices, for example, the access network device receives the first message and the second message from the core network device, as a possible implementation, operation 210 and operation 230 may be combined into one step, and the first message and the second message may be the same message or different messages.

In operation 240, as a possible implementation, the access network device may perform data collection or select a terminal equipment to perform the data collection according to the second message, or, the access network device may select a terminal equipment to perform the data collection according to the first message and the second message, or according to the first message, the second message, and the data collection capability information related to AI/ML of the terminal equipment.

For example, the access network device performs the data collection or selects a terminal equipment to perform the data collection within a scope indicated by the first configuration information included in the second message. For another example, the access network device selects a terminal equipment to perform the data collection according to the data collection authorization information related to AI/ML of a terminal equipment as indicated by the first message, a scope indicated by the second message, and the data collection capability information related to AI/ML of the terminal equipment.

In operation 240, as another possible implementation, the access network device may determine, according to the first message and/or the second message, that stored or collected data meets a requirement of data that needs to be collected as indicated by the second message, and the access network device may transmit the data to the OAM or other network device, or, the access network device may determine, according to the data source indication information, whether to transmit the data to the OAM or other network device.

In operation 250, that the access network device transmits the collected data to the OAM is taken as an example, the present disclosure does not impose limitations in this regard. It is understandable that the access network device may further transmit the collected data to other network devices.

As a possible implementation, the access network device receives identifier information and/or address information of the other network device, and transmits the collected data to the other network device based on the identifier information and/or the address information. Relevant contents regarding the collected data have been described above, and are not further repeated here.

In some examples, the access network device may receive the identifier information and/or the address information of the other network device from the OAM, the present disclosure is not limited thereto.

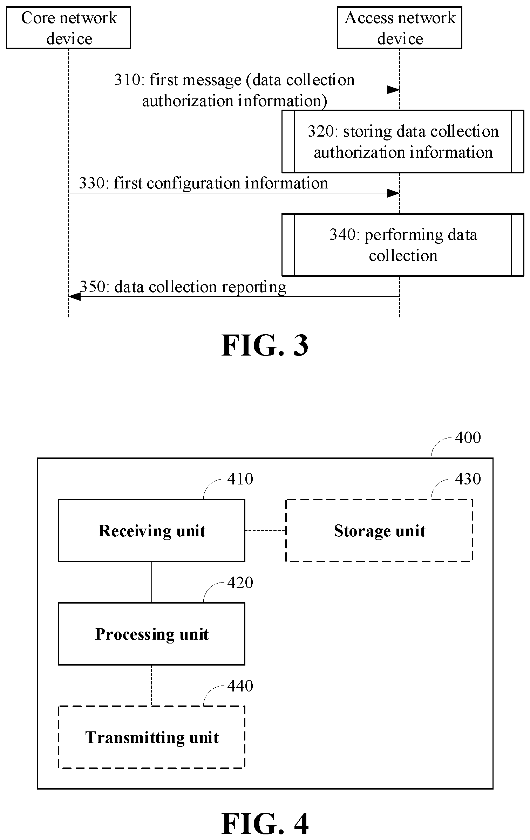

FIG. 3 is another schematic diagram of information interaction according to a data collection method in embodiments of the present disclosure. As shown in FIG. 3, a process of the information interaction includes:
310: an access network device receives a first message transmitted by a core network device, the first message being used to indicate data collection authorization information related to AI/ML of a terminal equipment;
320: the access network device stores the data collection authorization information related to AI/ML of a terminal equipment;
330: the access network device receives a third message transmitted by the core network device, the third message being used to indicate that the access network device performs data collection;
340: the access network device performs data collection; and
350: the access network device transmits collected data to the core network device, or other network device.

It is worth noting that the above FIG. 3 only schematically describes embodiments of the present disclosure, however the present disclosure is not limited thereto. For example, some other operations may be added or certain operations therein may be reduced. Those skilled in the art may make appropriate modifications according to the above contents, not being limited to records in the above FIG. 3.

In the above examples, the core network device may be an AMF, or may be other network device or entity.

In the above examples, relevant contents of operation 310 and operation 320 are the same as those of operation 210 and operation 220 in an embodiment shown in FIG. 2, and are not further repeated here.

In operation 330, the third message may be a terminal equipment context setup request message, a handover request message, a trace start message, or other message for data collection.

In the above examples, the third message includes the aforementioned first configuration information, the first configuration information including data collection configuration information. Optionally, the first configuration information may further include data source indication information. Relevant contents regarding the data collection configuration information and the data source indication information have been described above, and are not further repeated here.

It is understandable that the first configuration information may further include identifier information of a terminal equipment. Relevant contents about the identifier information of a terminal equipment have been described above, and are not further repeated here.

It is understandable that the first message and the third message may be the same message or may be different messages, the first message and the third message may be combined into one message, i.e., executed in the same step.

In operation 340, the access network device may perform the data collection according to the third message. For a specific description, the description in operation 240 may be referred to, and details thereof are not further repeated here. In operation 340, optionally, if first configuration information included in the third message includes identifier information of a terminal equipment, the access network device may configure the corresponding terminal equipment to perform the data collection according to the third message and based on the identifier information of the terminal equipment.

In operation 350, that the access network device transmits the collected data to the core network device is taken as an example, the present disclosure does not impose limitations in this regard. It is understandable that the access network device may further transmit the collected data to other network devices.

As a possible implementation, the access network device receives identifier information and/or address information of the other network device, and transmits the collected data to the other network device based on the identifier information and/or the address information. Relevant contents regarding the collected data have been described above, and are not further repeated here.

In some examples, the access network device may receive the identifier information and/or the address information of the other network device from the core network device, the present disclosure is not limited thereto.

Each of the above embodiments only exemplarily describes a method in embodiments of the present disclosure, however the present disclosure is not limited thereto, and appropriate variation(s) may be further made based on each of the above embodiments. For example, each of the above embodiments may be used individually, or one or more of the above embodiments may be combined.

According to the method in embodiments of the present disclosure, a core network device, or an OAM, or other network devices may obtain air interface data related to AI/ML at a terminal equipment side via a base station (an access network device), thereby providing data support for model training and implementing corresponding model training functions.

### Embodiments of a Second Aspect

Embodiments of the present disclosure provide a data collection apparatus. The apparatus may be e.g. a network device, or may be one or more components or assemblies configured in a network device. The network device is e.g. the first network device in embodiment of the first aspect, taking an access network device as an example, a principle of the apparatus to solve problems is same as the method in embodiments of the first aspect, thus specific implementation thereof may refer to implementation of the method in embodiments of the first aspect, and the same contents are not repeated for description.

FIG. 4 is a schematic diagram of the data collection apparatus in embodiments of the present disclosure, as shown in FIG. 4, the apparatus includes:
a receiving unit 410 configured to receive first configuration information, the first configuration information being used to indicate that a first network device performs collection of data related to artificial intelligence and/or machine learning; and
a processing unit 420 configured to perform collection of data related to artificial intelligence and/or machine learning according to the first configuration information.

In some embodiments, the first configuration information includes at least one of the following:
data collection configuration information, which is used to indicate configuration information for the first network device performing the data collection or the first network device configuring a terminal equipment to perform the data collection;
identifier information of a terminal equipment, which is used to indicate a terminal equipment that needs to perform data collection; or
data source indication information, which is used to indicate whether the data that meets requirements and has been stored or collected by the first network device may be accepted.

In the above embodiments, the data collection configuration information may include at least one of the following:
data collection mode information, which is used to indicate a data collection mode corresponding to a data collection configuration;
data collection area information, which is used to indicate an area in which data collection may be performed;
data collection type information, which is used to indicate data information and/or measurement result information that needs to be collected;
data collection operation information, which is used to indicate a logging mode of data collection;
data collection volume information, which is used to indicate a size of data that needs to be collected; or
data collection quality information, which is used to indicate a quality requirement for the data that needs to be collected.

The data collection mode for example may include at least one of the following: immediate collection, connected state log collection, non-connected state log collection, or trace collection.

The data collection area information for example may include at least one of the following: information of at least one beam of at least one cell, information of at least one cell, information of at least one tracking area code, information of at least one PLMN, or information of at least one tracking area identifier.

The beam information may be at least one of the following: beam type information, beam index information, or beam identifier information, the beam type information e.g., being at least one of an SSB and a CSI-RS; the information of at least one beam of the at least one cell, for example, may include beam information, or include beam information and cell information; and the information of a cell or the cell information, for example, may include at least one of the following: a cell global identifier, physical cell identifier and frequency information, a cell identifier, a non-public network identifier, a non-terrestrial network identifier, a tracking area code, or identifier information of a network device to which a cell belongs.

The data collection area information may be defined at a data collection type level, or a data collection mode level, or as common information.

The data collection type for example may include at least one of the following: CSI prediction, CSI compression, beam management, positioning, ordinary handover, conditional handover, or lower-layer triggered mobility.

The data collection operation information for example may include at least one of the following: logging interval information, and logging duration information.

The data collection volume information for example may include at least one of the following: a size of collected data, or the number of entries of collected data.

In the above embodiments, the identifier information of a terminal equipment may include at least one of the following:
identifier information of a terminal equipment at a core network device side on an interface between an access network and a core network device;
identifier information of a terminal equipment at an access network device side on an interface between an access network and a core network device;
a global unique temporary UE identity;
an international mobile subscriber identity; or
a temporary mobile subscriber identity.

In some embodiments, as shown in FIG. 4, the apparatus 400 further includes a storage unit 430.

In the above embodiments, the receiving unit 410 further receives a first message, the first message being used to indicate data collection authorization information related to artificial intelligence and/or machine learning of a terminal equipment; and the storage unit 430 stores the data collection authorization information related to artificial intelligence and/or machine learning of a terminal equipment.

In the above embodiments, the data collection authorization information is used to indicate information related to data collection that a terminal equipment is willing to support, which may include at least one of the following:
data collection type information, which is used to indicate data information and/or measurement result information that a terminal equipment is willing to support to be collected;
data collection mode information, which is used to indicate a data collection mode corresponding to a data collection configuration that a terminal equipment is willing to support; or
data collection area information, which is used to indicate an area in which a terminal equipment is willing to support data collection.

In some embodiments, the receiving unit 410 further receives data collection capability information related to artificial intelligence and/or machine learning of a terminal equipment; and the storage unit 430 stores the data collection capability information related to artificial intelligence and/or machine learning of a terminal equipment.

In some embodiments, the processing unit 420 selects a terminal equipment to perform the collection of the data according to first configuration information and the first message, or according to the first configuration information, the first message and the data collection capability information related to artificial intelligence and/or machine learning of a terminal equipment.

In some embodiments, the receiving unit 410 receives the first configuration information from an operation administration and maintenance (OAM) entity.

In some embodiments, the receiving unit 410 receives the first configuration information from a core network.

In some embodiments, as shown in FIG. 4, the apparatus 400 further includes a transmitting unit 440.

In the above embodiments, the transmitting unit 440 transmits the collected data to a core network device or an OAM entity or a second network device.

In the above embodiments, if the transmitting unit 440 transmits the collected data to the second network device, in one possible example, the receiving unit 410 may further receive identifier information and/or address information of the second network device transmitted by a core network device or an OAM entity.

In embodiments of the present disclosure, the collected data includes L1 measurement result information.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The above apparatuses may further include other components or modules. For detailed contents of these components or modules, relevant technologies may be referred to. Moreover, each of the above components or modules may be implemented via a hardware facility such as a processor, a memory, a transmitter, a receiver, etc. Embodiments of the present disclosure have no limitation thereto.

According to the apparatus in embodiments of the present disclosure, a core network device, or an OAM, or other network devices may obtain air interface data related to AI/ML at a terminal equipment side via a base station (an access network device), thereby providing data support for model training and implementing corresponding model training functions.

### Embodiments of a Third Aspect

Embodiments of the present disclosure further provide a communication system, including a network device and a terminal equipment.

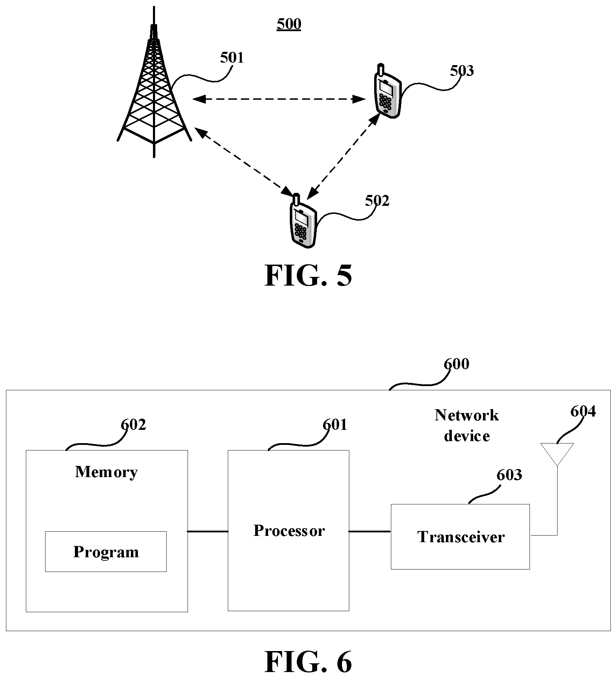

FIG. 5 is a schematic diagram of the communication system in embodiments of the present disclosure, schematically describing a situation by taking a terminal equipment and a network device as an example, and as shown in FIG. 5, the communication system 500 may include a network device 501 and terminal equipments 502, 503. For simplicity, FIG. 5 only takes two terminal equipments and one network device as an example for description, however embodiments of the present disclosure are not limited thereto.

In embodiments of the present disclosure, transmission of existing services or future implementable services may be performed between the network device 501 and the terminal equipments 502, 503. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 5 shows that two terminal equipments 502 and 503 are all within a coverage range of the network device 501, however the present disclosure is not limited thereto. Two terminal equipments 502 and 503 may be not within the coverage range of the network device 501, or one terminal equipment 502 is within the coverage range of the network device 501 while the other terminal equipment 503 is outside the coverage range of the network device 501.

In some embodiments, the network device includes the apparatus 400 in embodiments of the third aspect, configured to perform the method in embodiments of the second aspect. Since the method has been described in details in embodiments of the second aspect, contents thereof are incorporated here and are not repeated.

Embodiments of the present disclosure further provide a network device, the network device for example may be a base station, however the present disclosure is not limited thereto, the network device may further be other network device.

FIG. 6 is a schematic diagram of the network device in embodiments of the present disclosure. As shown in FIG. 6, the network device 600 may include: a processor 601, and a memory 602 coupled to the processor 601. The memory 602 may store various data; moreover, further stores a program for information processing, and executes the program under control of the processor 601.

In some embodiments, functions of the apparatus 400 in embodiments of the second aspect may be integrated into the processor 601, wherein the processor 601 may be configured to execute a program to implement the method described in embodiments of the first aspect, contents thereof are incorporated here and are not repeated here.

In some other embodiments, the apparatus 400 in the embodiments of the second aspect may be configured separately from the processor 601, for example the apparatus 400 in the embodiments of the second aspect may be configured as a chip connected to the processor 601, functions of the apparatus 400 in the embodiments of the second aspect are implemented through control of the processor 601.

In addition, as shown in FIG. 6, the network device 600 may further include: transceivers 603 and 604. Functions of the above components are similar to related arts, and are not further elaborated here. It is worth noting that the network device 600 does not have to include all components shown in FIG. 6. Moreover, the network device 600 may further include components not shown in FIG. 6, related arts may be referred to.

Embodiments of the present disclosure further provide a computer program, wherein when the program is executed in a network device, the program enables the network device to execute the method described in embodiments of the first aspect.

Embodiments of the present disclosure further provide a storage medium in which a computer program is stored, wherein the computer program enables a network device to execute the method described in embodiments of the first aspect.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Persons skilled in the art may make various variations and amendments to the present disclosure according to spirits and principles of the present disclosure, these variations and amendments are also within scopes of the present disclosure.

Regarding the above implementations disclosed in this embodiment, the following supplements are further disclosed:
1. A data collection method, wherein the method includes:
   a first network device receives first configuration information, the first configuration information being used to indicate that the first network device performs collection of data related to artificial intelligence and/or machine learning; and
   the first network devices perform collection of data related to artificial intelligence and/or machine learning according to the first configuration information.
2. A network device, including a memory configured to store a computer program, and a processor configured to execute the computer program to implement the method according to supplement 1.
3. A communication system, including a terminal equipment, and a network device configured to execute the method according to supplement 1.

## Claims

1. A data collection apparatus, configured in a first network device, wherein the apparatus comprises:
a receiving unit configured to receive first configuration information, the first configuration information being used to indicate that the first network device performs collection of data related to artificial intelligence and/or machine learning; and
a processing unit configured to perform collection of data related to artificial intelligence and/or machine learning according to the first configuration information.

2. The apparatus according to claim 1, wherein the first configuration information comprises at least one of the following:
data collection configuration information, which is used to indicate configuration information for the first network device to perform data collection or the first network device to configure a terminal equipment to perform data collection;
identifier information of a terminal equipment, which is used to indicate a terminal equipment that needs to perform data collection; or
data source indication information, which is used to indicate whether data that meets requirements and has been stored or collected by the first network device is able to be accepted.

3. The apparatus according to claim 2, wherein the data collection configuration information comprises at least one of the following:
data collection mode information, which is used to indicate a data collection mode corresponding to a data collection configuration;
data collection area information, which is used to indicate an area in which data collection is able to be performed;
data collection type information, which is used to indicate data information and/or measurement result information that needs to be collected;
data collection operation information, which is used to indicate a logging mode of data collection;
data collection volume information, which is used to indicate a size of data that needs to be collected; or
data collection quality information, which is used to indicate a quality requirement for the data that needs to be collected.

4. The apparatus according to claim 3, wherein,
the data collection mode comprises at least one of the following: immediate collection, connected state log collection, non-connected state log collection, or trace collection.

5. The apparatus according to claim 3, wherein,
the data collection area information comprises at least one of the following:
information of at least one beam of at least one cell, information of at least one cell,
information of at least one tracking area code, information of at least one PLMN, or
information of at least one tracking area identifier.

6. The apparatus according to claim 5, wherein,
the beam information comprises at least one of the following: beam type information, beam index information, or beam identifier information, the beam type information being at least one of an SSB and a CSI-RS;
the information of at least one beam of the at least one cell comprises beam information, or comprises beam information and cell information; and
the cell information comprises at least one of the following: a cell global identifier, physical cell identifier and frequency information, a cell identifier, a non-public network identifier, a non-terrestrial network identifier, a tracking area code, or identifier information of a network device to which a cell belongs.

7. The apparatus according to claim 3, wherein,
the data collection area information is defined at a data collection type level, or a data collection mode level, or as common information.

8. The apparatus according to claim 3, wherein,
the data collection type comprises at least one of the following: CSI prediction, CSI compression, beam management, positioning, ordinary handover, conditional handover, or L1/L2 triggered mobility.

9. The apparatus according to claim 3, wherein,
the data collection operation information comprises at least one of the following: logging interval information, and logging duration information.

10. The apparatus according to claim 3, wherein,
the data collection volume information comprises at least one of the following: a size of collected data, and the number of entries of collected data.

11. The apparatus according to claim 2, wherein the identifier information of a terminal equipment comprises at least one of the following:
identifier information of a terminal equipment at a core network device side on an interface between an access network and a core network device;
identifier information of a terminal equipment at an access network device side on an interface between an access network and a core network device;
a global unique temporary UE identity;
an international mobile subscriber identity; or
a temporary mobile subscriber identity.

12. The apparatus according to claim 1, wherein the apparatus further comprises: a storage unit,
the receiving unit further receives a first message, the first message being used to indicate data collection authorization information related to artificial intelligence and/or machine learning of the terminal equipment; and
the storage unit stores the data collection authorization information related to artificial intelligence and/or machine learning of the terminal equipment.

13. The apparatus according to claim 1, wherein the apparatus further comprises: a storage unit,
the receiving unit further receives data collection capability information related to artificial intelligence and/or machine learning of a terminal equipment; and
the storage unit stores the data collection capability information related to artificial intelligence and/or machine learning of a terminal equipment.

14. The apparatus according to claim 12, wherein the data collection authorization information is used to indicate information related to data collection that a terminal equipment is willing to support, and comprises at least one of the following:
data collection type information, which is used to indicate data information and/or measurement result information that a terminal equipment is willing to support to be collected;
data collection mode information, which is used to indicate a data collection mode corresponding to a data collection configuration that a terminal equipment is willing to support; or
data collection area information, which is used to indicate an area in which a terminal equipment is willing to support data collection.

15. The apparatus according to claim 12, wherein,
the processing unit selects a terminal equipment to perform collection of the data according to the first configuration information and the first message, or according to the first configuration information, the first message and the data collection capability information related to artificial intelligence and/or machine learning of a terminal equipment.

16. The apparatus according to claim 1, wherein,
the receiving unit receives the first configuration information from an operation administration and maintenance (OAM) entity.

17. The apparatus according to claim 1, wherein,
the receiving unit receives the first configuration information from a core network.

18. The apparatus according to claim 1, wherein the apparatus further comprises:
a transmitting unit configured to transmit the collected data to a core network device or an OAM entity or a second network device.

19. The apparatus according to claim 18, wherein,
the receiving unit further receives identifier information and/or address information of the second network device transmitted by the core network device or the OAM entity.

20. The apparatus according to claim 1, wherein,
the collected data comprises L1 measurement result information.
